# Europäisches Patentamt
# European Patent Office
# Office européen des brevets

(11) Publication number: **0 216 793**
**B1**

(12) **EUROPEAN PATENT SPECIFICATION**

(45) Date of publication of patent specification: 03.10.90

(21) Application number: 86900975.3

(22) Date of filing: 27.01.86

(86) International application number: PCT/US86/00116

(87) International publication number: WO 86/04913 28.08.86 Gazette 86/19

(51) Int. Cl.⁵: **C 08 L 67/02** // (C08L67/02, 53:02, 51:04)

(54) COPOLYETHERESTER MOLDING COMPOSITIONS.

(30) Priority: 19.02.85 US 702544

(43) Date of publication of application:
08.04.87 Bulletin 87/15

(45) Publication of the grant of the patent:
03.10.90 Bulletin 90/40

(84) Designated Contracting States:
DE FR GB IT NL

(56) References cited:
EP-A-0 015 146
EP-A-0 142 336
EP-A-0 150 454
EP-A-0 155 925
GB-A-2 087 903
GB-A-2 122 627
US-A-4 200 567

(73) Proprietor: GENERAL ELECTRIC COMPANY
1 River Road
Schenectady New York 12305 (US)

(72) Inventor: LIU, Nan-I
1604 Country Club Road, D
Mt. Vernon, IN 47620 (US)
Inventor: AGARWAL, Surendra, Hukamchand
51 Jolly Maker Apt. 3
Cutte Parade Bombay 400005 (IN)

(74) Representative: Sieb, Rolf, Dr. et al
General Electric - Deutschland Patentabteilung
Praunheimer Landstrasse 50
D-6000 Frankfurt/Main (DE)

EP 0 216 793 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to novel thermoplastic elastomeric molding compositions having excellent stress-strength properties, particularly low temperature impact resistance, while retaining low flexural modulus and excellent physical appearance. Specifically, the compositions of the present invention consist essentially of one or more thermoplastic copolyetherester elastomers in random or block form, and a property improving modifier combination therefor consisting of

a) a poly(butylene terephthalate) polyester,

b) a monoalkenyl arene-conjugated diene copolymer or copolymer composition and, optionally,

c) clay.

Copolyetheresters are well known and have enjoyed continued and increasing commercial success. They are available from several sources including the Hytrel® resins from E.I. duPont and the Gaflex® resins from GAF Corporation and are described in U.S.—A—3,023,192; 3,651,014; 3,763,109; 3,766,146; 3,784,520; 3,801,547; 4,156,774; 4,264,761 and 4,355,155, among others. While these copolyetheresters have a number of desirable properties including excellent tear strength, flex life, toughness, and general elastomeric stress-strain characteristics, their use is limited by their low flexural characteristics, primarily flexural modulus and flexural strength, as well as their generally low melt-viscosities. Depending upon their specific formulation, copolyetheresters suitable for molding applications vary from very soft elastomers to semi-rigid elastomers. However, many molding applications require that the molding compositions be rigid at least to the extent that molded parts therefrom are able to maintain their structural integrity and resist deformation upon low energy impact. Further, certain molding processes, e.g. shape forming by blow molding or profile-extrusions require the molding composition to have a moderate to fairly high melt-viscosity in order to avoid draw down of the melt resin.

It is suggested in the foregoing references that the modulus of elasticity of copolyetheresters may be increased by incorporating therein various reinforcing fillers such as glass and mica. More recently, it has been alleged that the flexural modulus as well as other physical properties may be enhanced by blending with copolyetheresters one or more thermoplastic polyesters. For example, according to US—A—3,907,926 there have been prepared copolyetherester compositions having alleged improved Young's modulus combined with good flexibility and low temperature impact strength by creating a uniform blend of poly(butylene terephthalate) and a copolyetherester. Additionally, according to GB—A—1,431,916 there have been prepared blends of a polyester, particularly poly(alkylene terephthalates), and a copolyetherester allegedly having improved impact strength, stiffness and processability. Finally, according to US—A—4,469,851 there have been prepared blends of poly(butylene terephthalate) and a copolyetherester derived from butanediol, butenediol, dimethylterephthalate and poly(tetramethylene ether) glycol which allegedly have improved melt stability.

It has also been suggested that the problems associated with draw down of the melt resin in shape forming can be overcome by admixing with the copolyetherester an ABS resin (terpolymer or acrylonitrile, butandiene and styrene) or an MBS resin (terpolymer of methylmethacrylate, butadiene and styrene). However, such compositions suffer from defects in surface characteristics, most noticeably the occurrence of roughness and fish-eyes. US—A—4 442 262 overcomes this problem by the use of a specific graft copolymer characterized as consisting essentially of a cross-linked styrene/methylmethacrylate shell grafted on a cross-linked butadiene or alkyl acrylate core.

While the addition of polyester or rubbery copolymer to copolyetheresters improves impact strength and/or flexural properties and draw down, respectively, each is not without problems. With respect to blends of polyester and copolyetherester, while flexural modulus and strength increase sharply as the polyester level increases, there is an equally dramatic loss of tensile elongation. Further, where low temperature impact is desired, the amount of polyester needed to provide an appreciable increase in low temperature impact is such that the flexural modulus may be too high for the application. With respect to blends of the rubbery copolymer with copolyetheresters, as mentioned, except for a small class of graft copolymers, rubbery copolymers induce, fish-eyes and other detrimental physical, particularly surface, characteristics to the polymer. The addition of the highly cross-linked graft copolymer of US—A—4 442 262 significantly lessens the problems with appearance, but at the loss of physical properties, most notably tensile strength and stress elongation.

It has now been found that copolyetheresters having excellent low temperature impact strength, excellent flexural properties and superior surface characteristics may be prepared by admixing therewith a modifier combination of a poly(butylene terephthalate) and a monoalkenyl arene-conjugated diene copolymer.

In accordance with the present invention there are provided improved thermoplastic elastomeric compositions having excellent flexibility and low temperature stress-strength properties combined with superior surface characteristics consisting essentially of:

A) one or more thermoplastic elastomeric copolyetheresters and

B) from 10 to 60 percent by weight, based on the combined weight of (A) & (B), of a modifier combination consisting essentially of:

i) one or more poly(butylene terephthalate) homopolyesters or copolyesters;

ii) a monoalkenyl arene-conjugated diene rubber copolymer being a core-shell graft copolymer comprising a predominately conjugated diene polymer core to which is grafted a shell polymerized from one or more monomers at least one of which is a monoalkenyl arene; and

iii) optionally, clay;

wherein a) the poly(butylene terephthalate) comprises from 5 to 50, preferably from 10 to 25, percent by weight of the total composition, b) the monoalkenyl arene-conjugated diene copolymer comprises from 5 to 30, preferably from 10 to 15, percent by weight of the total composition and c) the clay, if present, is used in an amount up to about 25, preferably 20 weight percent, based on the total composition.

In the most preferred compositions, the poly(butylene terephthalate) (B) (i) is poly(1,4-butylene terephthalate) and the monoalkenyl arene-conjugated diene copolymer is selected from graft copolymers of a polybutadiene core with a polymethylmethacrylate/polystyrene shell. Finally it is especially desirable to pre-compound the graft copolymer with some or all of the poly(butylene terephthalate) prior to admixing with the copolyetherester.

Suitable thermoplastic copolyetheresters (A) include both random and block copolymers. In general these are prepared by conventional esterification/polycondensation processes from (a) one or more diols, (b) one or more dicarboxylic acids, (c) one or more long chain ether glycols, and optionally, (d) one or more caprolactones or polycaprolactones.

Diols (a) which can be used in the preparation of the copolyetheresters include both saturated and unsaturated aliphatic and cycloaliphatic dihydroxy compounds as well as aromatic dihydroxy compounds. These diols are preferably of a low molecular weight, i.e. having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as, for example, ethylene oxide or ethylene carbonate for ethylene glycol.

Preferred saturated and unsaturated aliphatic and cycloaliphatic diols are those having from about 2 to 19 carbon atoms. Exemplary of these diols there may be given ethylene glycol; propanediol; butanediol; pentanediol; 2-methyl propanediol; 2,2,3-dimethyl propanediol; hexanediol; decanediol; 2-octyl undecanediol, 1,2-, 1,3- and 1,4-dihydroxy cyclohexane; 1,2-, 1,3- and 1,4-cyclohexane dimethanol; butenediol; hexenediol, etc. Especially preferred are 1,4-butanediol and mixtures thereof with hexanediol or butenediol.

Aromatic diols suitable for use in the preparation of the thermoplastic elastomers are generally those having from 6 to about 19 carbon atoms. Included among the aromatic dihydroxy compounds are resorcinol; hydroquinone; 1,5-dihydroxy naphthalene; 4,4'-dihydroxy diphenyl; bis(p-hydroxy phenyl)methane and 2,2-bis(p-hydroxy phenyl) propane.

Especially preferred diols are the saturated aliphatic diols, mixtures thereof and mixtures of a saturated diol(s) with an unsaturated diol(s), wherein each diol contains from 2 to about 8 carbon atoms. When more than one diol is employed, it is preferred that at least about 60 mole %, most preferably at least 80 mole %, based on the total diol content, be the same diol. As mentioned above, the preferred thermoplastic elastomers are those in which 1,4-butanediol is present in a predominant amount.

Dicarboxylic acids (b) which are suitable for use in the preparation of the copolyetheresters include aliphatic, cycloaliphatic, and/or aromatic dicarboxylic acids. These acids are preferably of a low molecular weight, i.e., having a molecular weight of less than about 350; however, higher molecular weight dicarboxylic acids, especially dimer acids, may also be used. The term "dicarboxylic acids" as used herein, includes equivalents of dicarboxylic acids having two functional carboxyl groups which perform substantially like dicarboxylic acids in reaction with glycols and diols in forming polyester polymers. These equivalents include esters and ester-forming derivatives, such as acid halides and anhydrides. Additionally, the dicarboxylic acids may contain any substituent group(s) or combinations which do not substantially interfere with the polymer formation and use of the polymer in the practice of this invention.

Aliphatic dicarboxylic acids, as the term is used herein, refers to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals or divalent radicals such as —O— or —SO$_2$—.

Representative aliphatic and cycloaliphatic acids which can be used are sebacic acid, 1,2-cyclohexane dicarboxylic acid, 1,3-cyclohexane dicarboxylic acid, 1,4-cyclohexane dicarboxylic acid, adipic acid, glutaric acid, succinic acid, oxalic acid, azelaic acid, dimethylmalonic acid, allylmalonic acid, dimer acid, 4-cyclohexene-1,2-dicarboxylic acid, 2-ethylsuberic acid, tetramethylsuccinic acid, cyclopentane dicarboxylic acid, decahydro-1,5-naphthalene dicarboxylic acid, 4,4'-bicyclohexyl dicarboxylic acid, decahydro-2,6-naphthalene dicarboxylic acid, 4,4-methylenebis(cyclohexane carboxylic acid), 3,4-furan dicarboxylic acid, and 1,1-cyclobutane dicarboxylic acid. Preferred aliphatic acids are cyclohexane dicarboxylic acids, sebacic acid, dimer acid, glutaric acid, azelaic acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl) methane, oxybis(benzoic acid), ethylene-1,2-bis-(p-oxybenzoic acid), 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, and halo and $C_1$—$C_{12}$ alkyl, alkoxy, and aryl ring substitution derivatives thereof. Hydroxy acids such as p(β-hydroxyethoxy)benzoic acid can also be used provided an aromatic dicarboxylic acid is also present.

Preferred dicarboxylic acids for the preparation of the polyetherimide esters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8—16 carbon atoms are preferred, particularly the benzene dicarboxylic acids, i.e., phthalic, terephthalic and isophthalic acids and their dimethyl derivatives. Especially preferred is dimethyl terephthalate.

Finally, where mixtures of dicarboxylic acids are employed, it is preferred that at least about 60 mole %, preferably at least about 80 mole %, based on 100 mole % of dicarboxylic acid (b) be of the same dicarboxylic acid or ester derivative thereof. As mentioned above, the preferred copolyetheresters are those in which dimethylterephthalate is the predominant dicarboxylic acid.

Suitable long chain ether glycols (c) which can be used in the preparation of the thermoplastic elastomers are preferably poly(oxyalkylene)glycols and copoly(oxyalkylene)glycols of molecular weight of from about 400 to 12000. Preferred poly(oxyalkylene) units are derived from long chain ether glycols of from about 900 to about 4000 molecular weight and having a carbon-to-oxygen ratio of from about 1.8 to about 4.3, exclusive of any side chains.

Representative of suitable poly(oxyalkylene)glycols there may be given poly(ethylene ether)glycol; poly(propylene ether)glycol; poly(tetramethylene ether)glycol; random or block copolymers of ethylene oxide and propylene oxide, including ethylene oxide end capped poly(propylene ether)glycol and predominately poly(ethylene ether) backbone, copoly(propylene ether-ethylene ether)glycol; and random or block copolymers of tetrahydrofuran with minor amounts of a second monomer such as ethylene oxide, propylene oxide, or methyltetrahydrofuran (used in proportions such that the carbon-to-oxygen ratio does not exceed about 4.3). Polyformal glycols prepared by reacting formaldehyde with diols such as 1,4-butanediol and 1,5-pentanediol are also useful. Especially preferred poly(oxyalkylene)glycols are poly(propylene ether)glycol, poly(tetramethylene ether)glycol and predominately poly(ethylene ether) backbone copoly(propylene ether-ethylene ether)glycol.

Optionally, these copolyetheresters may have incorporated therein one or more caprolactones or polycaprolactones. Such caprolactone modified copolyetheresters are disclosed in copending U.S. Pat. Application Serial No. 643,985 filed August 24, 1984, herein incorporated by reference.

Caprolactones (d) suitable for use herein are widely available commercially, e.g., Union Carbide Corporation and Aldrich Chemicals. While epsilon caprolactone is especially preferred, it is also possible to use substituted caprolactones wherein the epsilon caprolactone is substituted by a lower alkyl group such as a methyl or ethyl group at the alpha, beta, gamma, delta or epsilon positions. Additionally, it is possible to use polycaprolactone, including homopolymers and copolymers thereof with one or more components, as well as hydroxy terminated polycaprolactone, as block units in the novel copolyetheresters of the present invention. Suitable polycaprolactones and processes for their production are described in, for example, U.S. Pat. Nos. 3,761,511; 3,767,627, and 3,806,495 herein incorporated by reference.

In general, suitable copolyetherester elastomers (A) are those in which the weight percent of (c) long chain ether glycol component or the combined weight percent of (c) long chain ether glycol component and (d) caprolactone component in the copolyetherester is from about 5 to about 70 weight percent. Preferred composition are those wherein the weight percent of (c) or (c) and (d) is from about 10 to about 50 weight percent. Where both (c) long chain ether glycol and (d) caprolactone are present, each will comprise from about 2 to about 50 percent by weight, preferably from about 5 to about 30 percent by weight, of the copolyetherester.

As described above, the copolyetheresters may be prepared by conventional esterification/condensation reactions for the production of polyesters. Exemplary of the processes that may be practiced are as set forth in, for example, U.S. Pat. Nos. 3,023,192; 3,763,109; 3,651,014; 3,663,653 and 3,801,547, herein incorporated by reference. Additionally, these compositions may be prepared by such processes and other known processes to effect random copolymers, block copolymers or hybrids thereof wherein both random and block units are present. For example, it is possible that any two or more of the foregoing monomers/reactants may be prereacted prior to polymerization of the final copolyetheresters. Alternatively a two part synthesis may be employed where in two different diols and/or dicarboxylic acids are each prereacted in separated reactors to form two low molecular weight prepolymers which are then combined with the long chain ether glycol to form the final tri-block copolyetherester. Further exemplification of various copolyetheresters will be set forth below in the examples.

The foregoing thermoplastic elastomers (A) are modified in accordance with the teachings of the instant invention by admixing therewith a modifying amount of a combination (B) of (i) one or more thermoplastic poly(butylene terephthalate) homopolymer or copolymer, (ii) one or more monoalkenyl arene-conjugated diene rubbery copolymer and (iii) optionally, clay filler.

While poly(1,4-butylene terephthalate)homopolyester is the preferred poly(butylene terephthalate) polymer, copolyesters thereof are also suitable. Such copolyesters generally comprise at least about 70 mole percent, preferably at least 80 mole percent, based on total monomer content, of butylene and terephthalate units. The comonomer may be either a dicarboxylic acid or diol or a combination of the two. Suitable dicarboxylic acid comonomers include the $C_8$ to $C_{16}$ aromatic dicarboxylic acids, especially the benzene dicarboxylic acids, i.e. phthalic and isophthalic acids and their alkyl, e.g. methyl, derivatives and $C_4$ to $C_{16}$ aliphatic and cycloaliphatic dicarboxylic acids including for example sebacic acid; glutaric acid; azelaeic acid; tetramethyl succinic acid; 1,2-, 1,3- and 1,4-cyclohexane dicarboxylic acids and the like, as mentioned above. Suitable diol comonomers include but are not limited to $C_2$ to $C_8$ aliphatic and cycloaliphatic diols, e.g. ethylene glycol, hexanediol, butanediol and 1,2-, 1,3- and 1,4-cyclohexanedimethanol. Other suitable diols are as mentioned above for the preparation of the copolyetherester elastomer.

The monoalkenyl arene-conjugated diene copolymers suitable for use in the present invention are selected from core-shell type copolymers. Further, the term "monoalkenyl arene-conjugated diene" copolymers is intended to include copolymers having additional comonomers therein as long as both monoalkenyl arene monomers and conjugated diene monomers are each present in an amount of at least about 10 mole percent based on total monomer content of the copolymer.

The useful monoalkenyl arene-conjugated diene copolymers (B) (ii) are of the core-shell type. In general these are characterized as having a predominately conjugated diene rubbery core and one or more shells graft polymerized thereon and derived from monoalkenyl arene monomers alone or, preferably, in combination with other vinyl monomers.

More particularly, the first or core phase of the core-shell copolymer comprises polymerized conjugated diene units of one or more conjugated dienes alone or copolymerized with units of a vinyl monomer or mixture of vinyl monomers. Sutiable conjugated dienes for use in said core phase include butadiene, isoprene, 1,3-pentadiene and the like. Illustrative of the vinyl monomers copolymerizable therewith include the vinyl aromatic compounds such as styrene, alpha-methylstyrene, vinyl toluene, para-methylstyrene and the like; esters of acrylic and methacrylic acid, including for example methyl acrylate, ethyl acrylate, butyl acrylate, methyl methacrylate and ethyl methacrylate; and unsaturated aliphatic nitriles such as acrylonitrile, methacrylonitrile and the like. The core of said copolymer should comprise at least about 50 percent by weight of the conjugated diene. Preferred grafted core-shell copolymers for use herein comprise a core of polybutadiene homopolymer or a styrene-butadiene copolymer comprising about 10 to 50% by weight styrene and about 90 to 50% by weight of butadiene, having a molecular weight of from about 150,000 to about 500,000. The core phase may also include a cross-linking monomer, more particularly described below.

The final or shell phase of the copolymer comprises polymerized units of a monoalkenyl arene alone or copolymerized with one or more other vinyl monomers wherein at least 10 mole percent of the graft component is derived from the monoalkenyl arene monomer. Preferred monoalkenyl arene monomers are styrene, alpha-methylstyrene, para-methylstyrene and the like, most preferably styrene. Additional monomers that may be copolymerized therewith in an amount up to 90 mole % include the esters of acrylic and methacrylic acid including for example, ethyl acrylate, methyl acrylate, butyl acrylate, methyl methacrylate, ethyl methacrylate, butyl methacrylate and the like; unsaturated aliphatic nitrile such as acrylonitrile and methacrylonitrile and vinyl halides such as vinyl chloride and vinyl bromide. Especially preferred shells are those derived from polymerized units of styrene and methyl methacrylate wherein each is present in an amount of from 10 to 90 mole %. Additionally, these.shells may also have copolymerized therewith a minor amount, preferably less than 10 mole % of one or more of the other aforementioned monomer units. As with the core, the shell phase may also include a cross-linking monomer as discussed more fully below.

Optionally, the core-shell copolymers may further comprise one or more cross-linked or non-cross-linked intermediate layers which is grafted to the core and upon which the final shell layer is grafted, comprised of one or more polymerized vinyl monomer. Suitable vinyl monomers for one in these intermediate layers include but are not limited to those mentioned above, especially polystyrene. Where such intermediate layers are present in the core-shell copolymer and are derived from at least 10 mole % of a monoalkenyl arene monomer, the final or shell phase may comprise up to and including 100 mole % monomer units which are not monoalkenyl arene units. Especially preferred in such instances are multiphase copolymers wherein the intermediate phase comprises polystyrene and the final stage comprises polymethylmethacrylate.

As mentioned each of the individual stages of the core-shell copolymers may contain a cross-linking monomer which may serve not only to cross-link the units of the individual layers but also graft-link the shell to the core. As the cross-linking agent for use in preparation of the core-shell copolymers, those which copolymerize smoothly with the monomer in the respective stages of the reaction should be selected. Representative cross-linking agents include, but are not limited to aromatic polyfunctional vinyl compounds such as divinyl benzene, trivinyl benzene, divinyl toluene and the like; di and tri-methacrylates and di and triacrylates of polyols represented by monoethylene-, diethylene- and triethylene glycols, 1,3-butanediol and glycerin allyl esters of unsaturated aliphatic carboxylic acid such as allyl acrylate, allyl methacrylate and the like and di- and triallyl compounds such as diallyl phthalate, diallyl sebacate, triallyltriazine and the like are mentioned.

While the amount of cross-linking agent employed is from about 0.01 to 3.0% by weight based on the monomer charge for each stage of the reaction, generally, the total amount of cross-linking agent in the final graft copolymer will preferably be less than 3.0 weight percent.

The core-shell copolymers suitable for use herein generally comprise from about 50 to about 90 weight percent of the core and from about 10 up to 50 weight percent of the graft or shell phase. Where an intermediate phase or layer is present in the graft copolymer the shell and intermediate phase will each comprise from about 5 to about 25 weight percent of the copolymer.

The core-shell graft copolymers for use in the present invention are prepared by the conventional method of emulsion polymerization, however, in an alternative method, graft copolymerization may be carried out after suitably coagulating the latex of cross-linked trunk polymer for adjusting the size of the latex particles of the trunk polymer.

Also, during polymerization the monomeric components used in the graft copolymerization may be brought into reaction in one step, or in multiple steps while supplying them in portions of suitable ratio of the present invention between the components.

Specific examples of suitable core-shell graft copolymers and the production thereof are disclosed in for example U.S. Patent Numbers 4,180,494 and 4,292,233; herein incorporated by reference. Commercially available grafted core-shell copolymers for use herein include the KM653 and KM611 from Rohm and Haas Chemical Company.

Optionally, the modifier combination (B) may further comprise clay filler. Clays are well known and widely available commercially. Preferred clays are the crystalline and paracrystalline clays. Especially preferred are the crystalline clays, most preferably the Kaolin clays. The clays, particularly the Kaolin clays, may be in the hydrous form or in the calcined, anhydrous form. Exemplary of commercially available, suitable clays there may be given the clays available under the tradenames Whitex and Translink from Freeport Kaolin.

Additionally, it is preferred, although not required, to utilize clay fillers which have been treated with a titanate or silane coupling agent. Exemplary of such coupling agents there may be given vinyl tris 2-methoxy ethoxy silane and gamma-aminopropyl triethyoxy silane (A-1100, Union Carbide).

The modifier combination (B) comprises from about 10 to about 60 weight percent, preferably from about 20 to about 40 weight percent, based on the total composition. Individually, the modifiers comprising the modifier combination will each be present as follows:

—the poly(butylene terephthalate) (B) (i) comprises from about 5 to about 50, preferably from about 10 to about 25, percent by weight of the total composition.

—the monoalkenyl arene-conjugated diene copolymer (B) (ii) comprises from about 5 to about 30, preferably from about 10 to about 15, percent by weight of the total composition.

—the clay filler, if present, comprises up to about 25, preferably up to about 20 weight percent based on the total composition.

In a most preferred embodiment, where a core-shell copolymer is employed as the monoalkenyl arene-conjugated diene copolymer (B) (ii), it is desirable to precompound the core-shell copolymer with the poly(butylene terephthalate) or a portion thereof. As identified by Yusa et al. (U.S. 4,442,262), the use of core-shell copolymers in general with copolyetheresters results in the occurrence of surface roughness and fisheyes. Applicant has now surprisingly found that otherwise unsuitable core-shell copolymers may be employed without the occurrence of fisheye if the core-shell copolymer is pre-compounded with the poly(butylene terephthalate). Equally surprising is the finding that the use of the pre-compounded core-shell copolymer results in composition having unexpectedly improved physical properties as compared to those compositions wherein the poly(butylene terephthalate) and core-shell copolymers were not precompounded. In practice most any ratio of core-shell copolymer to poly(butylene terephthalate) may be used; however, it is preferred that the ratio of 4:1 to 1:4, most preferably 3:2 to 2:3, be employed to provide greater dispersibility of the core-shell copolymer in the final composition.

While the compositions of this invention possess many desirable properties, it is sometimes advisable and preferred to further stabilize certain of the compositions against thermal or oxidative degradation as well as degradation due to ultraviolet light. this can be done by incorporating stabilizers into the blend compositions. Satisfactory stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-4-hydroxy hydrocinnamic triester with 1,3,5-tris-(2-hydroxyethyl-s-triazine-2,4,6-(1H,3H,5H) trione, 4,4'-bis(2,6-ditertiary-butylphenyl); 1,3,5-trimethyl-2,4,6-tris-(3,5-ditertiary-butyl-4-hydroxylbenzyl)benzene and 4,4'-butylidene-bis(6-tertiary-butyl-m-cresol). Various inorganic metal salts or hydroxides can be used as well as organic complexes such as nickel dibutyl dithiocarbamate, manganous salicylate and copper 3-phenyl-salicylate. Typically amine stabilizers include N,N'-bis(beta-naphthyl)-p-phenylenediamine; N,N'-bis(1-methylheptyl)-p-phenylenediamine and either phenyl-beta-naphthyl amine or its reaction products with aldehydes. Mixtures of hindered phenols with esters of thiodipropionic acid, mercaptides and phosphite esters are particularly useful. Additional stabilization to ultraviolet light can be obtained by compounding with various UV absorbers such as substituted benzophenones and/or benzotriazoles.

The compositions of the present invention may be prepared by any of the well known techniques for preparing polymer blends or admixtures, with extrusion blending being preferred. Suitzable devices for the blending include single screw extruders, twin screw extruders, internal mixers such as the Bambury Mixer, heated rubber mills (electric or oil heat) or Farrell continuous mixers. Injection molding equipment can also be used to accomplish blending just prior to molding, but care must be taken to provide sufficient time and aggitation to insure uniform blending prior to molding.

Alternatively, the ingredients may be dry blended prior to extrusion or injection molding. Finally, as mentioned above the modifier combination, including the clay, if present, may be precompounded prior to compounding with the copolyesterester. The polymer compositions prepared in accordance with the present invention are suitable for a broad range of molding applications. These compositions manifest excellent physical attributes making them especially suited for applications requiring excellent stress-strength characteristics and low temperature impact strength yet good flexibility. Furthermore, parts prepared from these compositions have excellent surface characteristics and appearance in spite of their use of otherwise unsuitable core shell copolymers. Finally, these compositions are found to also exhibit unexpectedly improved flex life.

Detailed description of the preferred embodiments

The following examples are presented as illustrative of the present invention and are not to be construed as limiting thereof.

The following copolyetheresters were used in exemplifying the present invention:

Polymers A and B

Polymers A and B are random copolyetheresters derived from 25 parts butanediol, 14 parts hexanediol, 48 parts dimethyl terephthalate and 13 parts poly(tetramethylene ether) glycol (MW 1000 and 2000), respectively.

Polymers C and D

Polymers C and D are random copolyetheresters derived from 22 parts butanediol, 12 parts hexanediol, 42 parts dimethyl terephthalate and 24 parts poly(tetramethylene ether) glycol (MW 1000 and 2000), respectively.

Polymers E and F

Polymer E and F are random copolyetherester derived from butanediol, butenediol, dimethylterephthalate and poly(tetramethylene ether) glycol (MW 1000) and available from GAF Corporation as Gaflex® 555 and 547. The latter having a higher weight percent of ether glycol.

Polymer G

Polymer G is a block copolyetherester derived from butanediol, dimethyl terephthalate and poly(tetramethylene ether) glycol (MW 1000) and is available from E.I. du Pont as Hytrel® 7246.

Polymers H and I

Polymers H and I are triblock copolyetheresters derived from about 60 parts by weight poly(butylene terephthalate) prepolymer, about 30 parts by weight poly(tetramethylene ether) glycol (MW 1000) and about 15 parts by weight of poly(butylene hexahydrophthalate) prepolymer and poly(hexamethylene hexahydrophthalate) prepolymer, respectively.

All compositions were prepared by melt blending on a single screw Prodex® extruder. Physical properties of these compositions were determined in accordance with ASTM methods as follows:

| Notched Izod | ASTM D256 |
| Unnotched Izod | ASTM D256 |
| Flexural Strength | ASTM D790 |
| Tensile Elongation | ASTM D638 |
| Tensile Strength | ASTM |

Other physical properties were determined in accordance with procedures known and accepted in the art. Dynatup is a measure of stress-strength properties of the composition and is expressed as Emax/Etotal wherein Emax is the maximum energy the standard part can withstand under deflection before permanent deformation (i.e. non-recoverable deflection) and Etotal is the total energy that part can withstand before mixture. Finally all compositions contained less than about 2 parts by weight, generally, from 0.3 to 1.6 parts by weight phenolic and/or amine stabilizers typical for such compositions.

Examples 1 and 2, Comparative Examples A—D

Two series of compositions employing two different modulus copolyetheresters were prepared. Each series demonstrates the copolyetherester modified with a polyester as taught by the prior art for improved modulus and impact and the copolyetheresters of the present invention modified with a combination of polyester and a monoalkenyl arene-conjugated diene copolymer modified resin. The specific compositions and the physical properties thereof were as shown in Table 1.

A review of either set of examples, i.e. A and B with 1 or C and D with 2 demonstrates the marked improvement in low temperature impact strength by the composition of the present invention as compared to the minor improvement in the polyester modified copolyetheresters. Furthermore, in addition to the much low temperature impact strength, the composition of the present invention retained, for the most part, great flexibility wherein the polyester modified copolyetheresters tended to be very rigid in comparison, as evident by their much higher flexural modulus.

TABLE 1

| | A | B | 1 | C | D | 2 |
|---|---|---|---|---|---|---|
| Polymer B | 100 | 65 | 65 | — | — | — |
| Polymer D | — | — | — | 100 | 65 | 70 |
| PBT[a] | — | 35 | 20 | — | 35 | 20 |
| KM Conc.[b] | — | — | 15 | — | — | 10 |
| Notched Izod, Nm/cm (ft. lb/in) | NB | NB | NB | NB | NB | NB |
| Notched Izod, −30°C, Nm/cm (ft. lb/in) | 0.46 (0.85) | 0.51 (0.95) | 0.70 (1.3) | — | 0.65 (1.2) | 0.86 (1.6) |
| Unnotched Izod, −30°C, Nm/cm (ft. lb/in) | — | — | — | — | — | NB |
| Flexural Modulus, N/mm$^2$ (psi×10$^3$) | 128.1 (18.3) | 583.8 (83.4) | 343.7 (49.1) | 89.6 (12.6) | 602 (86) | 376 (53.7) |
| Tensile strength, N/mm$^2$ (psi) | 29.12 (4160) | 18.82 (2688) | 25.2 (3600) | 21.2 (3030) | 24.5 (3500) | 21.5 (3072) |
| Tensile elongation, % | 640 | 475 | 445 | 840 | 450 | 424 |

[a]poly(butylene terephthalate) availabel from General Electric Company as Valox® 295 resin.
[b]Concentrate of butadiene based core-shell impact modifier Rohm & Haas KM653 in Valox® 315 poly(butylene terephthalate) resin from GE, (45:55, wt/wt).

Example 3, Comparative Examples E and F

A series of compositions were prepared to scope out the breadth of the present invention. Consequently several monoalkenyl arene and conjugated diene copolymers were tried in the formulation of the compositions of the present invention. The specific compositions and the physical properties thereof were as shown in Table 2.

The results presented in Table 2 clearly demonstrate the specificity of the beneficial properties to those compositions employing copolymer modifier resins having both monoalkenyl arene and conjugated diene monomers or units. Other known rubbery copolymers, specifically the EPDM rubbers and the acrylate based core-shell copolymers did not demonstrate the marked improvement in low temperature notched izod and equally importantly, they were found to hae dynatup properties.

TABLE 2

| | 3 | E | F |
|---|---|---|---|
| Polymer B | 75 | 65 | 65 |
| PBT[a] | 15 | 20 | 20 |
| KM Core[b] | 10 | — | — |
| SBS[c] | — | — | — |
| K-EEA Con[d] | — | 15 | — |
| EPDM Conc.[e] | — | — | 15 |
| Notched izod, Nm/cm (ft. lb/in) | NB | NB | 3.2 |
| Notched izod, −30°C, Nm/cm (ft. lb/in) | 0.65 (1.2) | 0.54 (1.0) | 0.51 (0.95) |
| Flexural modulus, N/mm² ($10^3 \times$ psi) | 364 (52) | 308 (44) | 322 (46) |
| Tensile elongation, % | 490 | 440 | 320 |
| Dynatup, −30°C $E_{max}/E_{total}$ | 22/34 | 8/8 | 14/15 |

[a+b]—see footnotes Table 1.
[c]Styrene-Butadiene-Styrene triblock copolymer from Shell.
[d]Concentrate of Acrylic based core-shell copolymer (KM330) in ethylene ethylacrylate, 3:1.
[e]Epoxidized EPDM rubber in Valox® 315 poly(butylene terephthalate) resin, 75:25.

Examples 4 and 5

A series of compositions were prepared demonstrating the broad scope of the present invention. The specific formulations of the compositions and the physical properties thereof are shown in Table 3. As is evident from these examples, the percent by weight of the individual components of the present invention may vary widely and still the beneficial properties thereof are retained.

Examples 6—12

To further demonstrate the breadth of the present invention, a series of compositions were prepared within the scope of the present invention demonstrating its applicability to a broad spectrum of random and block copolyetherester elastomers. The formulations of each example and the physical properties thereof were as presented in Table 4.

TABLE 3

|  | 4 | 5 |
|---|---|---|
| Polymer B | 40 | 70 |
| PBT I[a] | — | 20 |
| PBT II[b] | 30 | — |
| KM Conc[c] | 30 | 9.5 |
| Na-St[a] | — | 0.5 |
| Notched izod, Nm/cm (ft. lb/in) | NB | 5.4 (10) |
| Unnotched izod −30°C, Nm/cm (ft. lb/in) | NB | NB |
| Flexural modulus N/mm$^2$ (psi×10$^3$) | 861 (123) | 364 (52) |
| Tensile strength, N/mm$^2$ (psi) | 32.7 (4670) | 19.6 (2800) |
| Tensile elongation, % | 398 | 280 |
| Dynatup E$_{max}$/E$_{total}$ | 22/41 | 19/31 |

[a]See note [a] Table 1.
[b]Poly(butylene terephthalate) availabel from General Electric Company as Valox® 315 resin.
[c]See note [b] Table 1.
[d]Sodium stearate nucleating agent.

TABLE 4

| | 6 | 7 | 8 | 9 | 10 | 11 | 12 |
|---|---|---|---|---|---|---|---|
| Polymer | A | B | C | D | G | H | I |
| Amount | 65 | 65 | 70.5 | 70.5 | 70 | 65 | 65 |
| PBT I[a] | 20 | 20 | 20 | 20 | 10 | — | — |
| PBT II[b] | — | — | — | — | — | 5 | 5 |
| KM. Conc.[c] | 15 | 15 | 9.5 | 9.5 | 20 | 30 | 30 |
| Notched izod, Nm/cm (ft. lb/in) | NB | NB | NB | NB | 0.65 (1.2) | NB | NB |
| Notched izod, −30°C Nm/cm (ft. lb/in) | 2.11 (3.9) | 0.70 (1.3) | 3.08 (5.7) | 1.18 (2.2) | 2.27 (4.2) | — | — |
| Unnotched izod, −30°C, Nm/cm (ft. lb/in) | NB | — | — | — | 10.3 (19) | NB | NB |
| Flexural modulus N/mm$^2$ (psi×10$^3$) | 292 (41.7) | 344 (49.1) | 328 (46.9) | 256 (36.6) | 749 (107) | 331 (47.3) | 289 (41.3) |
| Tensile elongation, % | 400 | 445 | 443 | 328 | 340 | 376 | 328 |

a,b,c.—See footnotes [a], [b], [c] Table 3.

Example 13

An additional example within the scope of the present invention was prepared to demonstrate the unexpected improvement in both physical properties and surface appearance by precompounding the core-shell graft copolymer with at least a portion of the poly(butylene terphthalate) prior to incorporating into the compositions of the present invention.

The formulation and the properties thereof are presented in Table 5.

TABLE 5

|  | 13 |
| --- | --- |
| Polymer D | 65 |
| PBT[a] | 20 |
| KM powder[b] | 15 |
| KM Conc.[c] | — |
| Notched izod, Nm/cm (ft. lb/in) | NB |
| Notched izod, −30°C, Nm/cm (ft. lb/in) | 1.24 (2.3) |
| Unnotched izod, −30°C, Nm/cm (ft. lb/in) | NB |
| Ross flex (cut) | 206 |
| Ross flex (no cut) | 4500 |
| Fisheyes | yes |

[a]See footnote [a] Table 1.
[b]Butadiene based core-shell copolymer from Rohm & Haas KM 653.
[c]See footnote [b] Table 1.

Examples 14—19, Comparative Examples G—J

A final series of examples were prepared demonstrating the benefit of the present invention to composition further including clay in order to reduce heat sag. The specific formulations and the physical properties thereof are set forth in Table 6. As is evident from the examples, the composition of the present invention exhibit improved impact strength, both notched izod and dynatup while retaining the low heat sag benefit of clay. These examples again, further demonstrate the breadth of the present invention to compositions in which the formulation of each of the components varies widely.

TABLE 6

| | 14 | G | 15 | H | 16 | I | J | 17 | 18 | 19 |
|---|---|---|---|---|---|---|---|---|---|---|
| Polymer E | 45 | 50 | — | — | — | — | 42 | 37 | 32 | 42 |
| Polymer F | — | — | 45 | 50 | 40 | 50 | — | — | — | — |
| PBT I[a] | 30 | 35 | 30 | 35 | — | — | 33 | 28 | 23 | 23 |
| PBT II[b] | — | — | — | — | 25 | 35 | — | — | — | — |
| KM Conc.[c] | 10 | — | 10 | — | 20 | — | — | 10 | 20 | 20 |
| Clay | 15 | 15 | 15 | 15 | 15 | 15 | 25 | 25 | 25 | 15 |
| Notched izod Nm/cm (ft. lb/in) | 1.70 (3.14) | 1.63 (3.02) | 2.11 (3.90) | 2.04 (3.78) | NB | 3.83 (7.1) (2NB) | 0.60 (1.11) | 0.68 (1.25) | 0.62 (1.14) | 0.69 (1.28) |
| Notched izod −30°C, Nm/cm (ft. lb/in) | 0.55 (1.01) | 0.36 (0.66) | 0.79 (1.46) | 0.68 (1.25) | — | — | 1.27 (2.36) | 1.64 (3.04) | 1.12 (2.08) | 1.94 (3.60) |
| Unnotched izod, −30°C Nm/cm (ft. lb/in) | 20.3 (37.6) (3NB) | 7.67 (14.2) (2NB) | 11.56 (21.6) (3NB) | 18.79 (34.8) (3NB) | NB | NB | 16.04 (29.7) | 17.93 (33.2) (3NB) | 11.72 (21.7) | NB |
| Tensile elongation, %, | 112 | 162 | 137 | 142 | 132 | 111 | — | — | — | — |
| Heag sag 143°C (290°F), 1 h/mm | 22 | 22 | 33 | 33 | 41 | 41 | 17 | 20 | 16 | 24 |
| Dynatup $E_{max}/E_{total}$ | 24/31 | 7/7 | 33/46 | 34/49 | 25/38 | 27/39 | — | — | — | — |

[a], [b], and [c]—See footnotes [a], [b], [c], Table 3.

**Claims**

1. A thermoplastic molding composition consisting essentially of:
A) one or more copolyetherester elastomers derived from:
a) one or more diols,
b) one or more dicarboxylic acids or the ester derivatives thereof,
c) one or more long chain ether glycols having a molecular weight of from 400 to 12000, and
d) optionally, one or more caprolactones, wherein the long chain ether glycol and caprolactone, if any, comprise from 5 to 70 weight percent of the copolyetherester, and
B) from 10 to 60 percent by weight, based on the combined weight of (A) & (B), of a modifier combination consisting of:
i) one or more poly(butylene terephthalate) homopolyesters or copolyesters; and
ii) a monoalkenyl arene-conjugated diene rubbery copolymer being a core-shell graft copolymer comprising a predominantly conjugated diene polymer core to which is grafted a shell polymerized from one or more monomers at least one of which is a monoalkenyl arene; and
iii) optionally, clay;
wherein a) the poly(butylene terephthalate) comprises from 5 to 50 percent by weight of the total composition, b) the monoalkenyl arene-conjugated diene copolymer comprises from 5 to 30 percent by weight of the total composition and c) the clay, if present, is used in an amount up to about 25 weight percent based on the total composition.

2. The composition of Claim 1 wherein the modifying combination (B) comprises from 20 to 40 percent by weight of (A) & (B) and wherein the modifying combination (B) is comprised of in percent by weight based on (A) & (B), from about 10 to 25 percent poly(butylene terephthalate), from about 10 to 15 percent monoalkenyl arene-conjugated diene copolymer and up to 20 percent clay.

3. The composition of Claim 1 wherein the copolyetherester elastomer is derived from
(a) one or more $C_2$ to $C_{19}$ aliphatic or cycloaliphatic diols,
(b) one or more $C_4$ to $C_{36}$ dicarboxylic acids,
(c) one or more poly(alkylene ether) glycols having a molecular weight of from 900 to 4000, and
(d) optionally, one or more captolactones, wherein
(i) at least 60 mole percent of the diols are the same
(ii) at least 60 mole percent of the dicarboxylic acids are the same, and
(iii) the combined amount of long chain ether glycol and caprolactone, if any, in the copolyetherester is from 10 to 50 weight present.

4. The composition of Claim 3 wherein at least about 80 mole percent of the diols and at least about 80 mole percent of the dicarboxylic acids are the same.

5. The composition of Claim 3 wherein the predominant dicarboxylic acid is dimethylterephthalate.

6. The composition of Claim 4 wherein the predominant dicarboxylic acid is dimethylterephthalate.

7. The composition of Claim 3 wherein the poly(alkylene ether)glycol is selected from the group consisting of poly(ethylene ether)glycol, poly(propylene ether)glycol, poly(tetramethylene ether)glycol and copoly(propylene ether-ethylene ether)glycol.

8. The composition of Claim 3 wherein the poly(alkylene ether)glycol is poly(tetramethylene ether)glycol.

9. The composition of Claim 1 wherein the copolyetherester contains a caprolactone in an amount of from 2 to 50 percent by weight.

10. The composition of Claim 10 wherein the caprolactone is epsilon caprolactone.

11. The composition of Claim 1 wherein the poly(butylene terephthalate) is poly(1,4-butylene terephthalate) homopolyester.

12. The composition of Claim 1 wherein the monoalkenyl arene-conjugated diene copolymer is a core-shell copolymer.

13. The composition of Claim 12 wherein the core-shell copolymer is comprised of a polybutadiene core having polymerized thereon a shell derived from styrene and methylmethacrylate units.

14. The composition of Claim 12 wherein the core-shell copolymer is comprised of a poly(butadienestyrene) core having polymerized thereon a shell derived from styrene and methylmethacrylate.

15. The composition of Claim 1 wherein clay is present.

16. The composition of Claim 1 wherein the clay is a calcined, Kaolin clay treated with a coupling or sizing agent.

17. The composition of Claim 1 wherein the monoalkenyl arene-conjugated diene copolymer is precompounded with at least a portion of the poly(butylene terephthalate).

18. The composition of Claim 17 wherein the monoalkenyl arene-conjugated diene copolymer is a core-shell copolymer.

**Patentansprüche**

1. Thermoplastische Formmasse, bestehend im wesentlichen aus:

(A) einem oder mehreren Copolyätherester-Elastomeren, abgeleitet von:

(a) einem oder mehreren Diolen,

(b) einer oder mehreren Dikarbonsäuren oder deren Esterderivaten,

(c) einem oder mehreren langkettigen Ätherglycolen mit einem Molekulargewicht von 400 bis 12000, und

(d) wahlweise einem oder mehreren Caprolactonen,

worin das langkettige Ätherglycol und das Caprolacton, wenn solches vorhanden, 5 bis 70 Gew.-% des Copolyätheresters umfassen und

(B) 10 bis 60 Gew.-%, bezogen auf das kombinierte Gewicht von (A) und (B), einer Modifizierungskombination, bestehend im wesentlichen aus

(i) einem oder mehreren Poly(butylenterephthalat)-Homopolyestern oder -Copolyestern und

(ii) einem einen monoalkenyl-substituierten aromatischen Kohlenwasserstoff und konjugiertes Dien enthaltenden kautschukartigen Copolymer, das ein Kern-Hülle-Pfropf-Copolymer ist, das einen in erster Linie aus einem Polymer aus konjugiertem Dien bestehenden Kern umfaßt, an den eine Hülle aus einem oder mehreren Monomeren pfropfpolymerisiert ist, von denen mindestens eines en monoalkenylsubstituierter aromatischer Kohlenwasserstoff ist, und

(iii) wahlweise Ton

worin (a) das Poly(butylenterephthalat) 5 bis 50 Gew.-% der Gesamtzusammensetzung, (b) das monoalkenyl-substituierten Kohlenwasserstoff und konjugiertes Dien enthaltende Copolymer 5 bis 30 Gew.-% der Gesamtzusammensetzung umfaßt und (c) der Ton, wenn vorhanden, in einer Menge bis zu etwa 25 Gew.-%, bezogen auf die Gesamtzusammensetzung, benutzt wird.

2. Masse nach Anspruch 10, worin die Modifizierungskombination (B) 20 bis 40 Gew.-% von (A) und (B) umfaßt und wobei die Modifizierungskombination (B) aus etwa 10 bis 25% Poly(butylenterephthalat), etwa 10 bis 15% monoalkenyl-substituerten aromatischen Kohlenwasserstoff und konjugiertes Dien enthaltendem Copolymer und bis zu 20% Ton, in Gew.-%, bezogen auf (A) und (B), zusammengesetzt ist.

3. Masse nach Anspruch 1, worin das Copolyätherester-Elastomer abgeleitet ist von

(a) einem oder mehreren aliphatischen oder cycloaliphatischen $C_2$ bis $C_{19}$-Diolen,

(b) einer oder mehreren $C_4$ bis $C_{36}$-Dikarbonsäuren,

(c) einem oder mehreren Poly(alkylenäther)glycolen mit einem Molekulargewicht von 900 bis 4000,

(d) wahlweise einem oder mehreren Kaprolactonen, worin

(i) mindestens 60 Mol-% Diole gleich sind,

(ii) mindestens 60 Mol-% der Dikarbonsäuren gleich sind,

(iii) die kombinierte Menge des langkettigen Ätherglycols und des Caprolactons, wenn solches vorhanden, im Copolyätherester 10 bis 50 Gew.-% beträgt.

4. Masse nach Anspruch 3, worin mindestens etwa 80 Mol-% der Diole und mindestens etwa 80 Mol-% der Dikarbonsäuren gleich sind.

5. Masse nach Anspruch 3, worin die vorherrschende Dikarbonsäure Dimethylterephthalat ist.

6. Masse nach anspruch 4, worin die vorherrschende Dikarbonsäure Dimethylterephthalat ist.

7. Masse nach Anspruch 3, worin das Poly(alkylenäther)glycol ausgewählt ist aus der Gruppe bestehend aus Poly(äthylenäther)glycol, Poly(propylenäther)glycol, Poly(tetramethylenäther)glycol und Copoly(propylenäther-äthylenäther)glycol.

8. Masse nach Anspruch 3, worin das Poly(alkylenäther)glycol Poly(tetramethylenäther)glycol ist.

9. Masse nach Anspruch 1, worin der Copolyätherester ein Caprolacton in einer Menge von 2 bis 50 Gew.-% enthält.

10. Masse nach Anpruch 9, worin das Kaprolacton Epsilon-Caprolacton ist.

11. Masse nach Anspruch 1, worin das Poly(butylenterephthalat) Poly(1,4-butylenterephthalat)-Homopolyester ist.

12. Masse nach Anspruch 1, worin das monoalkenyl-substituierten aromatischen Kohlenwasserstoff und konjugiertes Dien enthaltende Copolymer ein Kern-Hülle-Copolymer ist.

13. Masse nach Anspruch 12, worin das Kern-Hülle-Copolymer aus einem Polybutadien-Kern zusammengesetzt ist, auf den eine Hülle polymerisiert ist, die abgeleitet ist von Styrol- und Methylmethacrylat-Einheiten.

14. Masse nach Anspruch 12, worin das Kern-Hülle-Copolymer aus einem Poly(butadien-styrol)-Kern zusammengesetzt ist, auf den eine Hülle polymerisiert ist, abgeleitet von Styrol und Methylmethacrylat.

15. Masse nach Anspruch 1, in der Ton vorhanden ist.

16. Masse nach Anspruch 1, in der der Ton kalziniertes Kaolon ist, das mit einem Kupplungs- oder Grundiermittel behandelt ist.

17. Masse nach Anspruch 1, worin das monoalkenyl-substituierten aromatischen Kohlenwasserstoff und konjugiertes Dien enthaltende Copolymer mit mindestens einem Teil des Poly(butylenterephthalats) vorvermischt ist.

18. Masse nach Anspruch 17, worin das monoalkenyl-substituierten aromatischen Kohlenwasserstoff und konjugiertes Dien enthaltende Copolymer ein Kern-Hülle-Copolymer ist.

16

**Revendications**

1. Composition de moulage thermoplastique constituée essentiellement par:
A) un ou plusieurs élastomères de copolyétherester dérivés de:
a) un ou plusieurs diols,
b) un ou plusieurs acides dicarboxyliques ou leurs dérivés esters,
c) un ou plusieurs étherglycols à longue chaîne présentant une masse molaire comprise entre 400 et 12000, et
d) facultativement, une ou plusieurs caprolactones, sachant que l'étherglycol à longue chaîne et la caprolactone, si elle est présente, représentent de 5 à 70% en poids du copolyétherester, et
B) de 10 à 60% en poids, exprimé par rapport aux poids combinés de (A) et de (B), d'une combinaison d'agents de modification constituée essentiellement par:
i) un ou plusieurs homopolyesters ou copolyesters de poly(téréphtalate de butylène); et
ii) un copolymère caoutchouteux de monoalcénylarène-diène conjugué qui est un copolymère greffé à noyau et enveloppe comprenant un noyau de polymère obtenu principalement à partir de diène conjugué auquel est greffée une enveloppe polymérisée à partir d'un ou de plusieurs monomères dont au moins un est un monoalcénylarène; et
iii) facultativement, de l'argile;
sachant que a) le poly(téréphtalate de butylène) représente de 5 à 50 pourcent en poids de la composition totale, b) le copolymère de monoalcénylarène-diène conjugué représente de 5 à 30 pourcent en poids de la composition totale et c) l'argile, si on l'utilise, est présente en une quantité pouvant aller jusqu'à environ 25 pourcent en poids de la composition totale.

2. Composition selon la revendication 1, dans laquelle la combinaison d'agents de modification (B) représente de 20 à 40 pourcent en poids de (A) et de (B) et dans laquelle la combinaison d'agents de modification (B) se compose, en pourcent en poids de (A) et de (B), d'environ 10 à 25 pourcent de poly(téréphtalate de butylène), d'environ 10 à 15 pourcent de copolymère de monoalcénylarène-diène conjugué et jusqu'à 20 pourcent d'argile.

3. Composition selon la revendication 1, dans laquelle l'élastomère de copolyétherester est dérivé de:
(a) un ou plusieurs diols aliphatiques ou cycloaliphatiques en $C_2$ à $C_{19}$,
(b) un ou plusieurs acides dicarboxyliques en $C_4$ à $C_{36}$,
(c) un ou plusieurs poly(oxyalkylène)glycols présentant une masse molaire comprise entre 900 et 4000, et
(d) facultativement, une ou plusieurs caprolactones, sachant que:
(i) au moins 60 moles pourcent des diols sont constituées par le même diol,
(ii) au moins 60 moles pourcent des acides dicarboxyliques sont constituées par le même acide dicarboxylique, et
(iii) la quantité combinée d'étherglycol à longue chaîne et de caprolactone, si on en utilise, dans le copolyétherester, est comprise entre 10 et 50 pourcent en poids.

4. Composition selon la revendication 3, dans laquelle au moins environ 80 moles pourcent des diols et au moins environ 80 moles pourcent des acides dicarboxyliques sont constituées par le même diol et par le même acide dicarboxylique.

5. Composition selon la revendication 3, dans laquelle l'acide dicarboxylique prédominant est le téréphtalate de diméthyle.

6. Composition selon la revendication 4, dans laquelle l'acide dicarboxylique prédominant est le téréphtalate de diméthyle.

7. Composition selon la revendication 3, dans laquelle le poly(oxyalkylène)glycol est choisi dans le groupe constitué par le poly(oxyéthylène)glycol, le poly(oxypropylène)glycol, le poly(oxytétraméthylène)glycol et le copoly(oxypropylène-oxyéthylène)glycol.

8. Composition selon la revendication 3, dans laquelle le poly(oxyalkylène)glycol est le poly(oxytétraméthylène)glycol.

9. Composition selon la revendication 1, dans laquelle le cpolyétherester contient une caprolactone en une quantité comprise entre 2 et 50 pourcent en poids.

10. Composition selon la revendication 10, dans laquelle la caprolactone est l'epsilon-caprolactone.

11. Composition selon la revendication 1, dans laquelle le poly(téréphtalate de butylène) est un homopolyester de poly(téréphtalate de butylène-1,4).

12. Composition selon la revendication 1, dans laquelle le copolymère de monoalcénylarène-diène conjugué est un copolymère à noyau et enveloppe.

13. Composition selon la revendication 12, dans laquelle le copolymère à noyau et enveloppe se compose d'un noyau de polybutadiène sur lequel est polymérisée une enveloppe dérivée de motifs de styrène et de méthacrylate de méthyle.

14. Composition selon la revendication 12, dans laquelle le copolymère à noyau et enveloppe se compose d'un noyau de poly(butadiène-styrène) sur lequel est polymérisée une enveloppe dérivée de styrène et de méthacrylate de méthyle.

15. Composition selon la revendication 1, dans laquelle de l'argile est présente.

16. Composition selon la revendication 1, dans laquelle l'argile est une argile Kaolin, calcinée, traitée avec un agent de couplage ou d'ensimage.

17. Composition selon la revendication 1, dans laquelle on pré-homogénéise le copolymère de monoalcénylarène-diène conjugué avec au moins une partie du poly(téréphtalate de butylène).

18. Composition selon la revendication 17, dans laquelle le copolymère de monoalcénylarène-diène conjugué est un copolymère à noyau et enveloppe.